# FASCICULE DE BREVET EUROPEEN

(11) **EP 1 834 838 B1**
(45) Date de publication et mention de la délivrance du brevet: **19.11.2008**
(21) Numéro de dépôt: 06300234.9
(22) Date de dépôt: 15.03.2006
(51) Int. Cl.: B60R 7/10, B60R 7/04, B60J 3/02, B60R 11/00

(54) **Dispositif de montage rapide d'accessoires sur la garniture d'un pavillon de toit d'un véhicule automobile**
Anordnung zum schnellbefestigen von Zubehör an der Dachverkleidung eines Kraftfahrzeugs
Device for quickly fitting accessories on the headliner of a vehicle

(43) Date de publication de la demande: 19.09.2007
(73) Titulaire: PEUGEOT CITROËN AUTOMOBILES S.A., 78140 Vélizy Villacoublay (FR)
(72) Inventeur: Rousseau, Frédéric, 78730, Ponthevrard (FR)
(74) Mandataire: Couillard, Yann Luc Raymond

(56) Documents cités:
- EP-A- 1 493 653
- US-A- 5 636 891
- US-A1- 2002 175 535
- US-B1- 6 179 366
- US-B1- 6 234 558

## Description

La présente invention est relative à un dispositif pour le montage rapide d'accessoires sur la garniture d'un pavillon de toit ou similaire, pour un véhicule automobile, et plus particulièrement un dispositif selon le préambule de la revendication 1. Un tel dispositif est décrit dans US 5, 636, 891.

Elle s'applique notamment à des accessoires de pavillon du genre des crochets usuellement prévus au dessus de certaines vitres latérales du véhicule pour y suspendre des vêtements ou autres, d'éléments de pare-soleil montés en avant de l'emplacement du conducteur au dessus du pare-brise, de poignées de maintien, disposées sous le pavillon à l'avant ou à l'arrière de l'habitacle, d'organes de support des faisceaux de câbles électriques d'alimentation de l'antenne de toit ou d'autres équipements du véhicule, des tuyauteries des lave-glace etc.., qui sont généralement fixés derrière la garniture qui recouvre le pavillon du toit de cet habitacle.

De manière classique, ces divers éléments sont vissés sur ou à travers la garniture alors que celle-ci est déjà en place contre le pavillon, ce qui impose des opérations de montage relativement compliquées et nécessite des postures pour les intervenants qui ne sont pas toujours aisées et ergonomiques, en fonction notamment de la structure des accessoires, de la forme de l'habitacle et du positionnement dans celui-ci des pièces à fixer.

La présente invention est relative à un dispositif autorisant un montage rapide et simple de ces accessoires sur la garniture avant que celle-ci ne soit mise en place et immobilisée contre le pavillon dans l'habitacle, pour constituer ainsi un module pré-équipé avant transfert et mise en place finale en une opération unique.

A cet effet, le dispositif considéré comprend les caractéristiques de la revendication 1.

Avantageusement, la contre plaque comporte dans sa face portant les tétons d'accrochage, des pions de positionnement en relief, assurant le centrage de la contre plaque vis-à-vis de l'orifice de passage dans la garniture.

Selon une caractéristique particulière, la contre plaque est métallique ou réalisée par moulage d'un matériau plastique, les tétons souples comprenant une languette flexible terminée par une partie en forme de crochet, propre à solidariser la lamelle de liaison de l'agrafe avec la contre plaque.

Selon une autre caractéristique, la contre plaque comporte un axe central de symétrie, les pions de positionnement occupant des emplacements opposés par rapport à cet axe.

De préférence, chaque pion de positionnement présente une partie droite perpendiculaire au plan de la contre plaque en contact avec un bord de l'orifice de passage et prolongé par un retour replié sur lui-même vers l'extérieur de l'orifice de passage, prenant appui sur la garniture.

D'autres caractéristiques du dispositif considéré, établi conformément à l'invention, apparaîtront encore à travers la description qui suit d'un exemple de réalisation, donné à titre indicatif et non limitatif, en référence aux dessins annexés sur lesquels :
- La Figure 1 est une vue en coupe transversale d'un accessoire fixé sur la garniture du pavillon d'un véhicule automobile au moyen d'un dispositif conforme à l'invention.
- La Figure 2 illustre en vue éclatée la disposition relative de l'accessoire, de l'agrafe de liaison et de la contre plaque du dispositif.
- La Figure 3 est une vue schématique en perspective de la garniture du pavillon.
- La Figure 4 illustre l'accessoire monté sur la garniture au moyen du dispositif considéré.

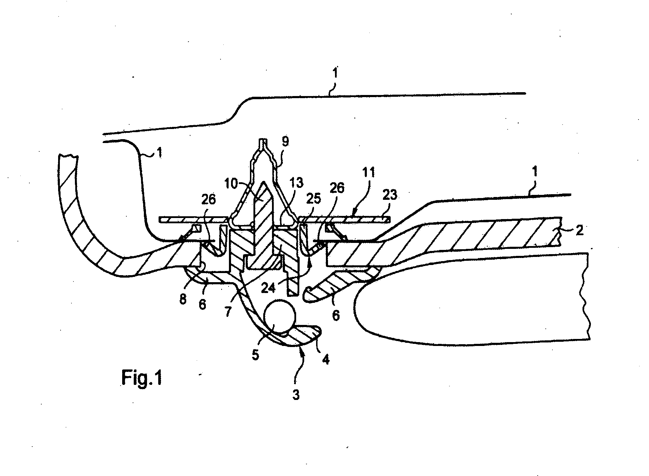

Sur la Figure 1, la référence 1 désigne schématiquement le pavillon supérieur du toit de l'habitacle d'un véhicule automobile, ce pavillon étant associé à une garniture de recouvrement 2, plaquée contre la tôle du pavillon et sur laquelle sont à monter des accessoires divers tels que 3, par exemple et dans le cas illustré, un crochet 4 pour un élément de support 5 d'un vêtement ou autre, que le conducteur du véhicule ou un passager souhaite suspendre dans l'habitacle.

Le cas particulier d'un crochet 4 doit être considéré comme une simple éventualité, l'accessoire 3 pouvant correspondre à de nombreuses autres réalisations usuelles dans leur application à un véhicule automobile, du genre d'un élément de poignée de maintien pour le passager, du support de blocage ou d'articulation du pare-soleil placé devant le conducteur à la partie supérieure du pare-brise avant, voire d'autres éléments classiques qu'il convient de fixer à la garniture, à l'extérieur ou à l'intérieur de celle-ci, sous le pavillon 1.

Le crochet 4 comporte une portée d'appui 6 qui s'applique sous la garniture 2 et présente un élément central 7 en saillie qui pénètre à l'intérieur d'un orifice de passage 8 ménagé dans cette garniture au droit de l'emplacement où l'accessoire 3 doit être immobilisé vis-à-vis du pavillon 1, les dimensions transversales de cet orifice 8 étant inférieures à celles de l'accessoire, en particulier de sa portée d'appui 6 de sorte qu'il ne puisse pas le traverser et soit au contraire arrêté contre la face inférieure de la garniture.

L'élément central 7 de l'accessoire 3 est solidarisé en usine, préalablement à son montage sous la garniture 2, avec une agrafe 9, de préférence réalisée en métal, traversant l'orifice 8 en direction du pavillon 1, la liaison étant obtenue par une vis, un rivet ou un moyen de blocage analogue 10, dont le détail de la réalisation est en lui-même indifférent à l'invention.

L'agrafe 9, une fois engagée dans l'orifice 8, est immobilisée en position grâce à une contre plaque 11, métallique ou de préférence réalisée par moulage d'un matériau plastique rigide, présentant un profil sensiblement plan, qui vient s'appliquer contre la garniture 2 et pincer celle-ci sur l'accessoire 3, la structure de l'agrafe et de la contre plaque faisant l'objet des précisions exposées ci-après.

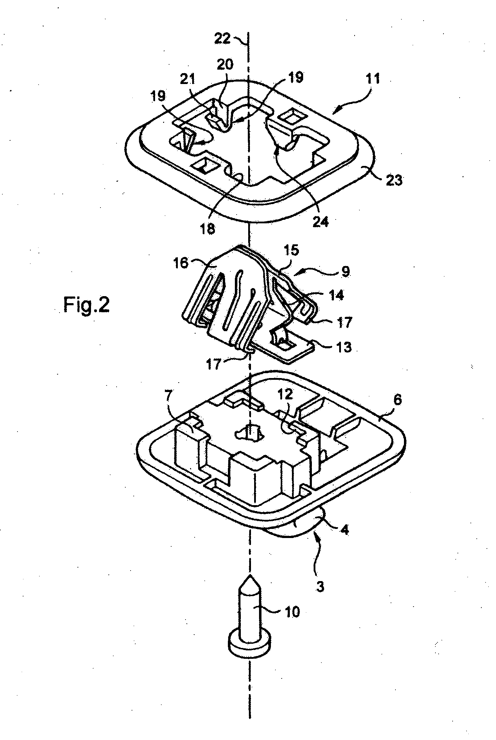

Sur la Figure 2, on retrouve ainsi, en partant du bas vers le haut, le moyen de blocage 10, l'accessoire 3 formé du crochet 4 et de la portée d'appui 6 contre la garniture 2, dont est solidarisé l'élément central 7 de l'accessoire.

Cet élément 7 comporte à sa partie supérieure un lamage 12, dans lequel vient se disposer une lamelle de liaison 13 prévue à la base de l'agrafe 9, permettant de solidariser cette dernière de l'accessoire par le moyen de blocage 10.

La lamelle 13 de l'agrafe 9 se prolonge par une extension 14 en saillie vers le haut, qui s'étend sensiblement selon une direction verticale, perpendiculairement au plan de la lamelle, cette extension étant solidaire de part et d'autre de celle-ci de deux ailes 15 et 16 qui forment entre elles un angle déterminé, chacune de ces ailes se terminant, sensiblement au droit de la lamelle 13 par des retours internes 17 dirigés vers cette dernière.

La contre plaque d'immobilisation 11 comporte un passage central 18 dans lequel s'engage librement l'extension en saillie 14 de l'agrafe 9, et présente un ensemble de tétons d'accrochage 19, de préférence au nombre de quatre, dont deux seulement apparaissent sur la Figure 2 pour ne pas surcharger le dessin, ces tétons 19 jouant le rôle de ressorts de liaison et présentant chacun à cet effet une languette flexible 20, terminée par une partie en forme de crochet 21 dirigée vers l'intérieur du passage 18.

L'ensemble constitué par l'accessoire 3, l'agrafe 9 et la contre plaque 11, comporte un axe de symétrie 22, schématiquement illustré sur la figure selon la direction duquel s'effectue l'emboîtement des diverses pièces, la contre plaque 11 venant notamment se fixer sur l'agrafe 9 par coopération des languettes 20 des tétons souples 19 et notamment des crochets 21 qui prolongent ces languettes, sous les retours internes 17 des ailes 15 et 16 en les solidarisant mutuellement par une fixation s'effectuant à la manière de clips.

La contre plaque 11 comporte par ailleurs une collerette externe 23 dont les dimensions en largeur sont sensiblement supérieures à celles de l'orifice 8 prévu dans la garniture 2, de manière à venir s'appliquer contre la face supérieure de celle-ci, en même temps qu'elle est solidarisée de l'agrafe 9 par ses tétons 19 comme indiqué ci-dessus.

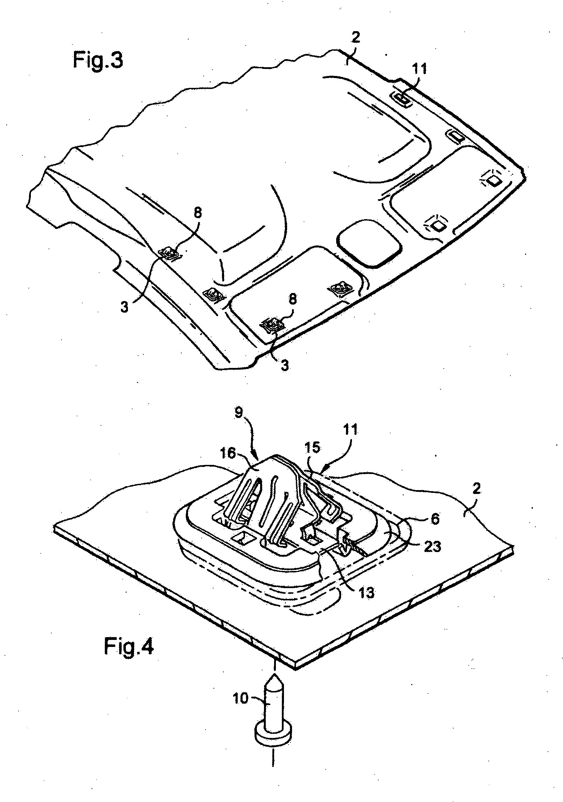

La Figure 3 montre en vue perspective de dessus la garniture 2 prévue pour être montée sous le pavillon 1, cette garniture comportant divers orifices de passage 8 convenablement répartis dans son étendue pour la fixation des différents accessoires 3 précités.

La Figure 4 illustre plus particulièrement la manière dont cette garniture 2 est pincée en sandwich entre la collerette 23 de la contre plaque 11 qui s'applique par le dessus de cette garniture et la portée d'appui 6 de l'accessoire 3 qui est en contact avec sa face inférieure, en immobilisant ainsi l'ensemble par simple encliquetage de la contre plaque sur l'agrafe, elle-même préalablement solidarisée de la partie centrale 7 de l'accessoire par le moyen de blocage 10.

Avantageusement, la contre plaque 11 comporte des pions de positionnement 24 (Figure 2), de préférence au nombre de deux et s'étendant en relief sous la contre plaque, de manière opposée l'un à l'autre dans le passage central 18, de part et d'autre de l'axe de symétrie 22, ces pions étant aménagés de telle sorte qu'ils assurent le centrage de la contre plaque correspondante 11 dans l'orifice 8 de la garniture recevant la partie centrale 7 de l'accessoire 3, en réalisant le rattrapage des jeux éventuels au montage, consécutifs notamment aux tolérances de fabrication de ces pions.

A cet effet, chaque pion comporte avantageusement une partie droite 25, sensiblement perpendiculaire au plan de la contre plaque 11, en contact avec l'orifice de passage 8 et prolongé par un retour replié sur lui-même 26 dirigé vers l'extérieur de cet orifice pour prendre appui sous la garniture 2.

On réalise ainsi un dispositif d'immobilisation rapide d'accessoires divers sur la garniture de toit du pavillon d'un véhicule automobile, ces accessoires étant fournis par le fabricant déjà équipés de l'agrafe de liaison de sorte qu'il suffit à l'intervenant sur la chaîne de montage de présenter et d'introduire l'agrafe dans l'orifice de passage avant d'encliqueter sur celle-ci la contre plaque pinçant la garniture, cette dernière étant finalement disposée et fixée sous le pavillon avec tous les accessoires déjà en place de la manière indiquée, ce qui apporte une économie de temps notable et un coût de fabrication largement plus réduit.

Bien entendu, il va de soi que l'invention ne se limite pas à l'exemple de réalisation plus spécialement décrit et représenté ci-dessus ; elle en embrasse au contraire toutes les variantes. Notamment, il a plus spécialement été fait référence dans la description à divers types d'accessoires à l'usage du conducteur ou des passagers que l'on rencontre de manière usuelle dans l'équipement interne de l'habitacle d'un véhicule ; d'autres dispositions similaires pourraient cependant être aussi bien envisagées pour réaliser des fonctions distinctes, comme par exemple pour plaquer et maintenir immobilisés contre le pavillon des éléments techniques comme des faisceaux de câbles ou analogues, assurant l'alimentation électrique de certains appareils entrant dans la construction de ce véhicule.

Ainsi, sans modifier les caractéristiques propres de l'agrafe 9 et ses modalités de montage contre le pavillon, on peut aisément prévoir de solidariser sa contre plaque 11 en matière plastique d'une extension latérale venue de fabrication avec elle et dont l'extrémité opposée est libre de façon à lui conférer une certaine souplesse en flexion vis-à-vis de la contre plaque elle même, cette extension latérale étant conformée en boucle ouverte ou avec un profil similaire pour constituer une sorte de pince, propre à contenir un câble ou autre élément et à le plaquer sur le pavillon en l'immobilisant en place contre ce dernier, la forme de la pince et notamment sa profondeur étant adaptée à la section du câble à maintenir.

## Revendications

1. Dispositif pour le montage rapide d'accessoires sur la garniture d'un pavillon de toit pour véhicule automobile, le dispositif comportant une agrafe (9), de préférence métallique, comprenant une lamelle de liaison (13), propre à être fixée par emboîtement, vissage ou similaire sur un lamage de réception (12) prévu sur un accessoire (3) à solidariser de la garniture (2), l'agrafe comportant une partie en saillie externe (14) s'étendant à partir de la lamelle de liaison à l'opposé de l'accessoire, pénétrant dans un orifice de passage (8) ménagé dans la garniture à l'emplacement prévu pour le montage de cet accessoire, les dimensions de cet orifice de passage étant inférieures à celles de l'accessoire portant l'agrafe, le dispositif étant **caractérisé en ce qu'**il comporte en combinaison avec cette agrafe une contre plaque d'immobilisation (11), sensiblement plane, maintenant la garniture pincée entre l'accessoire et la contre plaque, celle-ci comportant dans une de ses faces un ensemble de tétons d'accrochage souples (19), aptes à se fixer à la manière de clips sur l'agrafe (9).

2. Dispositif selon la revendication 1, **caractérisé en ce que** la contre plaque (11) comporte dans sa face portant les tétons d'accrochage (19), des pions de positionnement en relief (24), assurant le centrage de la contre plaque vis-à-vis de l'orifice de passage (8) dans la garniture (2).

3. Dispositif selon l'une des revendications 1 ou 2, **caractérisé en ce que** la contre plaque (11) est métallique ou réalisée par moulage d'un matériau plastique, les tétons souples (19) comprenant une languette flexible (20) terminée par une partie en forme de crochet (21), propre à solidariser la lamelle de liaison (13) de l'agrafe (9) avec la contre plaque.

4. Dispositif selon l'une des revendications 2 ou 3, **caractérisé en ce que** la contre plaque (11) comporte un axe central de symétrie (22), les pions de positionnement (24) occupant des emplacements opposés par rapport à cet axe.

5. Dispositif selon l'une quelconque des revendications 2 à 4, **caractérisé en ce que** chaque pion de positionnement (24) présente une partie droite (25) perpendiculaire au plan de la contre plaque en contact avec l'orifice de passage (8) et prolongé par un retour replié sur lui-même (26) dirigé vers l'extérieur de cet orifice pour prendre appui sous la garniture (2).

## Claims

1. Device for quickly fitting accessories onto the head lining of a motor vehicle roof, the device comprising a fastener (9), preferably a metal fastener, comprising a connecting blade (13) that can be push-fastened, screw-fastened or the like to an accepting counterbore (12) provided on an accessory (3) that is to be secured to the head lining (2), the fastener comprises an externally projecting part (14) extending from the connecting strip away from the accessory and entering a passage hole (8) formed in the head lining at the location at which this accessory is to be fitted, the dimensions of this passage hole being smaller than those of the accessory bearing the fastener, the device being **characterized in that** it comprises, in combination with this fastener, a substantially planar immobilizing backing plate (11) that keeps the head lining trapped between the accessory and the backing plate, the latter on one of its faces having a set of flexible catching studs (19) capable of fastening themselves to the fastener (9) in the manner of clips.

2. Device according to Claim 1, **characterized in that** the backing plate (11) has, in its face that bears the catching studs (19), raised positioning pegs (24) which centre the backing plate with respect to the passage hole (8) in the head lining (2).

3. Device according to either of Claims 1 and 2, **characterized in that** the backing plate (11) is made of metal or is produced by moulding a plastic, the flexible studs (19) comprising a flexible tab (20) ending in a hook-shaped part (21) capable of securing the connecting tongue (13) of the fastener (9) to the backing plate.

4. Device according to one of Claims 2 and 3, **characterized in that** the backing plate (11) has a central axis of symmetry (22), the positioning pegs (24) occupying opposed locations with respect to this axis.

5. Device according to any one of Claims 2 to 4, **characterized in that** each positioning peg (24) has a straight part (25) perpendicular to the plane of the backing plate in contact with the passage hole (8) and extended by a return folded back on itself (26) and directed towards the outside of this hole so as to rest on the underside of the head lining (2).

## Patentansprüche

1. Anordnung zum Schnellbefestigen von Zubehör an der Dachverkleidung eines Kraftfahrzeugs, wobei die Anordnung eine Klammer (9), die vorzugsweise metallisch ist, aufweist, die eine Verbindungslamelle (13) aufweist, die durch Einklinken, Schrauben oder Ähnliches auf einer Aufnahmeflachsenkung (12), die auf einem Zubehör (3), das mit der Verkleidung (2) fest zu verbinden ist, befestigt werden kann, wobei die Klammer einen außen vorstehenden Teil (14) aufweist, der sich ausgehend von der Verbindungslamelle dem Zubehör gegenüber erstreckt, der in eine Durchgangsöffnung (8), die in der Verkleidung an der Stelle eingerichtet ist, die für das Montieren dieses Zubehörs befestigt ist, eindringt, wobei die Maße dieser Durchgangsöffnung kleiner sind als die des Zubehörs, das die Klammer trägt, wobei die Vorrichtung **dadurch gekennzeichnet ist, dass** sie kombiniert mit dieser Klammer eine Blockiergegenplatte (11), die im Wesentlichen eben ist, aufweist, die die Verkleidung zwischen dem Zubehör und der Gegenplatte verklemmt hält, wobei diese in einer ihrer Seiten eine Einheit biegsamer Anhängansätze (19) aufweist, die sich clipsartig an der Klammer (9) befestigen können.

2. Anordnung nach Anspruch 1, **dadurch gekennzeichnet, dass** die Gegenplatte (11) auf ihrer Seite, die die Anhängansätze (19) trägt, Reliefpositionierstifte (24) aufweist, die das Zentrieren der Gegenplatte gegenüber der Durchgangsöffnung (8) in der Verkleidung (2) sicherstellen.

3. Anordnung nach einem der Ansprüche 1 oder 2, **dadurch gekennzeichnet, dass** die Gegenplatte (11) metallisch ist oder durch Formen eines Kunststoffmaterials hergestellt wird, wobei die biegsamen Ansätze (19) eine biegsame Zunge (20) aufweisen, die in einem hakenförmigen Teil (21) endet, der die Verbindungslamelle (13) der Klammer (9) fest mit der Gegenplatte verbinden kann.

4. Anordnung nach einem der Ansprüche 2 oder 3, **dadurch gekennzeichnet, dass** die Gegenplatte (11) eine zentrale Symmetrieachse (22) aufweist, wobei die Positionierstifte (24) Plätze, die in Bezug auf diese Achse entgegen gesetzt sind, einnehmen.

5. Vorrichtung nach einem der Ansprüche 2 bis 4, **dadurch gekennzeichnet, dass** jeder Positionierstift (24) einen geraden Teil (25) senkrecht zu der Ebene der Gegenplatte in Berührung mit der Durchgangsöffnung (8) und verlängert durch einen auf sich selbst zurückgefalteten Rücklauf (26), der zur Außenseite dieser Öffnung gerichtet ist, um unter der Verkleidung (2) aufzuliegen, aufweist.
